# EUROPÄISCHE PATENTSCHRIFT

(11) **EP 3 026 303 B1**
(45) Veröffentlichungstag und Bekanntmachung des Hinweises auf die Patenterteilung: **06.01.2021**
(21) Anmeldenummer: 14195433.9
(22) Anmeldetag: 28.11.2014
(51) Int. Cl.: F04D 19/04, F04D 29/08, F16J 15/02, F16J 15/10

(54) **VAKUUMPUMPE, VAKUUMZUBEHÖR UND DICHTUNG ZU DESSEN ABDICHTUNG**
VACUUM PUMP, VACUUM ACCESSORIES AND THEIR SEALING
POMPE À VIDE, ACCESSOIRE ET JOINT D'ÉTANCHÉITÉ

(43) Veröffentlichungstag der Anmeldung: 01.06.2016
(73) Patentinhaber: PFEIFFER VACUUM GMBH, 35614 Asslar (DE)
(72) Erfinder: Hofmann, Bernd, 35578 Wetzlar (DE); Schweighöfer, Michael, 35641 Schöffengrund (DE); Stoll, Tobias, 35644 Hohenahr (DE); Watz, Robert, 35781 Weilburg (DE)
(74) Vertreter: Manitz Finsterwald Patent- und Rechtsanwaltspartnerschaft mbB

(56) Entgegenhaltungen:
- EP-A2- 1 852 613
- EP-A2- 2 228 540
- JP-A- S5 517 705
- JP-A- H11 201 289
- JP-A- 2000 055 204
- JP-A- 2011 089 615
- US-A1- 2008 309 071
- US-A1- 2010 232 999
- US-A1- 2011 204 545
- US-B1- 6 730 385

## Beschreibung

Die vorliegende Erfindung betrifft eine Abdichtung in einem Vakuumsystem, insbesondere eine Abdichtung einer Verbindung einer Vakuumpumpe, insbesondere Turbomolekularpumpe oder SplitFlow-Pumpe.

Vakuumpumpen wie z.B. Turbomolekularpumpen werden in unterschiedlichen Bereichen der Technik eingesetzt, um ein für einen jeweiligen Prozess notwendiges Vakuum zu schaffen. Turbomolekularpumpen umfassen einen Stator mit mehreren in Richtung einer Rotorachse aufeinanderfolgenden Statorscheiben und einen relativ zu dem Stator um die Rotorachse drehbar gelagerten Rotor, der eine Rotorwelle und mehrere auf der Rotorwelle angeordnete, in axialer Richtung aufeinanderfolgende und zwischen den Statorscheiben angeordnete Rotorscheiben umfasst, wobei die Statorscheiben und die Rotorscheiben jeweils eine pumpaktive Struktur aufweisen. Eine ähnliche Vakuumpumpe ist z.B. aus US 2008/309071 A1 bekannt. Bei den Splitflow-Pumpen handelt es sich um Vakuumpumpen, die für ein differenzielles Pumpen bzw. für die Verbindung mit einem Mehrkammersystem mit mehreren Ansaugöffnungen oder Anschlüssen vorgesehen sind.

In der Vakuumtechnik werden als Dichtungen häufig Fluorelastomer-O-Ringe eingesetzt. Bei solchen Elastomerdichtungen kann es jedoch insbesondere bei niedrigeren Drücken zu einem Ausgasen kommen. Aufgrund einer solchen Ausgasung und auch aufgrund von Diffusion sind solche Elastomerdichtungen nur begrenzt einsetzbar. Auf dem Gebiet der sogenannten Vorpumpen beispielsweise, also in Druckbereichen von nicht weniger als etwa 10⁻⁴ mbar (10⁻² Pa), kommt es noch nicht zu Problemen mit derartigen Dichtungen. Niedrigere Drücke sind mit solchen Dichtungen allerdings nicht mehr erreichbar. Bei Drücken kleiner oder gleich 10⁻⁵ mbar (kleiner oder gleich 10⁻³ Pa) kann das Ausgasen von Elastomerdichtungen zu einer signifikanten Verschlechterung der Vakuumwerte führen. Spätestens bei Drücken kleiner oder gleich 10⁻⁹ mbar (kleiner oder gleich 10⁻⁷ Pa) ist der Einsatz derartiger Elastomerdichtungen aufgrund der vorstehend erwähnten Problematik völlig ausgeschlossen.

Um dennoch elastomere Dichtungen bei niedrigeren Drücken einsetzen zu können, wurde bereits eine kombinierte Dichtung aus einer Elastomerdichtung und einer Spaltdichtung mit dazwischen angeordneter Absaugung vorgeschlagen. Eine solche kombinierte Dichtung ist jedoch relativ aufwändig.

Es sind auch bereits sogenannte "CF-Dichtungen" bekannt, bei denen die einander gegenüberliegenden Flansche der Dichtung aus Edelstahl bestehen und zwischen die Edelstahlflansche ein Kupferdichtring eingesetzt wird. An den Edelstahlflanschen sind einstückig mit den Flanschen Schneidkanten ausgebildet, die sich in den Kupferring eindrücken oder einschneiden und dadurch abdichten. Solche Flansche werden auch Conflat-Flansche (eingetragene Marke der Agilent Technologies Inc., USA) genannt. Flansche dieser Art sind zwar bei Hoch- oder Ultrahochvakuumpumpen einsetzbar. Sie besitzen jedoch den Nachteil, dass sie infolge der dauerhaften Verformung nicht mehrfach einsetzbar sind und Flansche bzw. komplette Gehäuse aus Edelstahl voraussetzen, was relativ aufwändig und kostspielig ist.

Der Erfindung liegt die Aufgabe zugrunde, ein Vakuumsystem bzw. eine Vakuumpumpe der eingangs genannten Art anzugeben, bei der auch sehr niedrige Drücke mit möglichst einfachen und entsprechend kostengünstigen Dichtungen realisierbar sind.

Die Aufgabe wird erfindungsgemäß durch eine Vakuumpumpe mit den Merkmalen des Anspruchs 1 und ein Vakuumsystem mit den Merkmalen des Anspruchs gelöst. Bevorzugte Ausführungsformen des erfindungsgemäßen Vakuumsystems bzw. der erfindungsgemäßen Vakuumpumpe ergeben sich aus den Unteransprüchen, der vorliegenden Beschreibung sowie der Zeichnung.

Die erfindungsgemäße Vakuumpumpe, insbesondere Turbomolekularpumpe oder SplitFlow-Pumpe, ist über wenigstens eine Ansaugöffnung mit einem Rezipienten verbindbar und zur Erzeugung eines Drucks kleiner oder gleich 10⁻⁵ mbar (kleiner oder gleich 10⁻³ Pa), vorzugsweise zur Erzeugung eines Drucks kleiner oder gleich 10⁻⁷ mbar (kleiner oder gleich 10⁻⁵ Pa), insbesondere zur Erzeugung eines Drucks kleiner oder gleich 10⁻⁹ mbar (kleiner oder gleich 10⁻⁷ Pa) in dem Rezipienten ausgeführt, wobei zur Abdichtung der Verbindung wenigstens eine Dichtung vorgesehen ist, die einen Kern, insbesondere einen Elastomerkern, sowie einen Mantel umfasst, der den Kern auf dessen der Ansaugöffnung zugewandten Seite umgibt.

Aufgrund dieser Ausbildung können nunmehr auch niedrigere Drücke mit relativ einfachen und entsprechend kostengünstigen Dichtungen realisiert werden. Man geht davon aus, dass die erfindungsgemäßen Dichtungen sogar in Druckbereichen von 10⁻⁸ bis 10⁻¹¹ mbar (10⁻⁶ Pa bis 10⁻⁹ Pa) eingesetzt werden können. So kann der Mantel des Kerns, insbesondere des Elastomerkerns, im Wesentlichen ohne Beeinträchtigung der Elastizität der Dichtung so gewählt werden, dass das Ausgasen der Dichtung soweit wie möglich minimiert oder ganz verhindert wird, während die erforderliche Elastizität durch den Kern gewährleistet wird. Die jeweilige Dichtung ist nunmehr auch mehrmals einsetzbar. Zudem entfallen die relativ aufwändigen und teuren Edelstahlflansche bzw. Edelstahlgehäuse.

Der Mantel der Dichtung besteht aus einem Material, das PTFE-(Polytetrafluorethylen)-Kunststoff oder auf PTFE basierenden Kunststoff enthält, oder aus einem Perfluorethylenpropylen-(FEP)- und/oder Perfluoralkoxylalkan-(PFA)-Kunststoff enthaltenden Material. Der Kern der Dichtung besteht vorteilhafterweise aus einem Fluorelastomer enthaltenden Material.

Der Kern kann beispielsweise aus FKM (Fluorkautschuk), VMQ (Silikon-Kautschuk) oder EPDM (Ethylen-Propylen-Dien-Kautschuk) oder aus einem FKM, VMQ oder EPDM enthaltenden Material bestehen.

PTFE-Kunststoffe oder auf PTFE basierende Kunststoffe besitzen zwar bezüglich der Diffusion schlechtere Eigenschaften als z.B. Fluorelastomere, sie gasen jedoch bei niedrigeren Drücken weniger aus. Nachdem der Mantel im Vergleich zum Dichtungskern relativ dünn ausgeführt werden kann, macht der Mantel lediglich einen geringen Teil des Querschnitts der Dichtung aus, so dass die Diffusion durch den Mantel der Dichtung vernachlässigbar klein ist. Aufgrund der geringen Diffusion durch den insbesondere aus einem Fluorelastomer enthaltenden Material bestehenden Kern gelangen nur wenige Moleküle durch die Dichtung hindurch. Da der Mantel der Dichtung aus einem Material besteht, das PTFE-Kunststoff oder auf PTFE basierenden Kunststoff enthält, ist die Ausgasung aus der Dichtung in den Bereich niedrigen Drucks deutlich reduziert. Durch die Kombination dieser beiden genannten Effekte können somit wesentlich niedrigere Drücke erreicht werden als mit den üblichen Fluorelastomer-Dichtungen ohne Mantel. Der Kern der Dichtung, insbesondere ein Elastomer- bzw. Fluorelastomerkern, kann das gewünschte elastische Verhalten der Dichtung gewährleisten, womit diese mehrfach verwendbar ist, was bei reinen PTFE-Dichtungen nicht der Fall wäre.

Der Mantel der Dichtung besitzt vorteilhafterweise eine Dicke im Bereich von 0,1 mm bis 1,5 mm und insbesondere eine Dicke im Bereich von 0,2 mm bis 0,8 mm. Grundsätzlich sind auch geringere oder größere Dicken möglich.

Zur Abdichtung der Verbindung können insbesondere auch zumindest zwei ineinander liegende, insbesondere zueinander koaxiale, Dichtungen vorgesehen sein, wobei in diesem Fall zumindest eine innere Dichtung mit einem Mantel versehen sein kann.

Der erfinderischen Verwendung der Dichtung entsprechend, ist auch für solche Abdichtung von Vorteil, wenn der Mantel der inneren Dichtung auf der der äußeren Dichtung zugewandten Seite offen oder überlappend ausgeführt ist und Mittel zur Absaugung des Bereichs zwischen den beiden Dichtungen vorgesehen sind. Mit einer solchen doppelten Dichtung können besonders niedrige Drücke erreicht werden.

Als äußere Dichtung kann eine Dichtung mit Mantel oder ohne Mantel zum Einsatz kommen. Die innere Dichtung ist zumindest teilweise mit einem Mantel versehen. Der Mantel der inneren Dichtung ist auf einer Seite offen oder überlappend ausgeführt, also nicht nahtlos bzw. geschlossen, so dass die offene bzw. überlappende Seite zur Zwischenabsaugung hin angeordnet ist. Ausgasende und diffundierte Teilchen werden durch die Zwischenabsaugung zwischen den Dichtungen abgesaugt. Die innere Dichtung muss also nicht mehr gegen Atmosphärendruck abdichten, wodurch Diffusionseffekte zur Seite des niedrigeren Drucks hin reduziert werden. Es können somit besonders niedrige Drücke erreicht werden.

Eine jeweilige Dichtung kann beispielsweise als O-Ring oder auch als Flachdichtung vorgesehen sein.

Die jeweilige Dichtung kann im Querschnitt vollständig ausgefüllt sein oder einen oder mehrere Hohlräume aufweisen, d.h. es kann sich um eine Volldichtung oder um eine Hohldichtung handeln.

Die Vakuumpumpe kann einen oder auch mehrere Vakuumanschlüsse besitzen. Im letzteren Fall können bestimmte Vakuumanschlüsse auch auf einem unterschiedlichen Druckniveau liegen. Die verschiedenen Vakuumanschlüsse können in derselben Ebene oder auch in unterschiedlichen Ebenen liegen.

Ein entsprechendes Vakuumzubehör kann sich dadurch auszeichnen, dass es für Drücke kleiner oder gleich 10⁻⁵ mbar (kleiner oder gleich 10⁻³ Pa), vorzugsweise für Drücke kleiner oder gleich 10⁻⁷ mbar (kleiner oder gleich 10⁻⁵ Pa), insbesondere für Drücke kleiner oder gleich 10⁻⁹ mbar (kleiner oder gleich 10⁻⁷ Pa) ausgelegt ist und wenigstens eine Dichtung aufweist, die einen Kern, insbesondere einen Elastomerkern, sowie einen Mantel umfasst, der den Kern zumindest teilweise umgibt.

Ein solches Vakuumzubehör kann beispielsweise Flut- oder Sperrgasventile, Drucksensoren, Temperatursensoren, Schaugläser, Blenden, Gasregulierventile, Hochvakuum-Schieber, Ultrahochvakuum-Schieber, Rezipienten, Vakuumkammern und/oder dergleichen umfassen.

Der Mantel der Dichtung des Vakuumzubehörs besteht bevorzugt aus einem Material, das PTFE-Kunststoff oder auf PTFE basierenden Kunststoff enthält. Der Kern der Dichtung kann insbesondere aus einem Fluorelastomer enthaltenden Material bestehen.

Ferner kann der Mantel der Dichtung aus einem FEP- und/oder PFA-Kunststoff enthaltenden Material bestehen.

Von Vorteil ist insbesondere auch, wenn der Mantel der betreffenden Dichtung des Vakuumzubehörs eine Dicke im Bereich von 0,1 mm bis 1,5 mm und insbesondere eine Dicke im Bereich von 0,2 mm bis 0,8 mm besitzt.

Auch bei einem solchen Vakuumzubehör können zur Abdichtung einer jeweiligen Verbindung insbesondere auch wieder zumindest zwei ineinander liegende Dichtungen vorgesehen sein, und zwar optional in den bereits vorstehend genannten Ausführungsmöglichkeiten.

Ein weiterer Aspekt der Erfindung betrifft die Verwendung einer Dichtung mit einem Kern, insbesondere einem Elastomerkern, und einem diesen zumindest teilweise umgebenden Mantel zur Abdichtung in einem Vakuumsystem, insbesondere zur Abdichtung einer Verbindung einer Vakuumpumpe, insbesondere Turbomolekularpumpe oder SplitFlow-Pumpe, mit einem Rezipienten und/oder einer Verbindung mit Vakuumzubehör, wobei das Vakuumsystem für Drücke oder zur Erzeugung von Drücken kleiner oder gleich 10⁻⁵ mbar, vorzugsweise für Drücke kleiner oder gleich 10⁻⁷ mbar, insbesondere für Drücke kleiner oder gleich 10⁻⁹ mbar, ausgelegt ist, und/oder wobei in dem Vakuumsystem auf zumindest einer Seite der Verbindung ein Druck kleiner oder gleich 10⁻⁵ mbar, vorzugsweise kleiner oder gleich 10⁻⁷ mbar, insbesondere kleiner oder gleich 10⁻⁹ mbar herrscht oder hergestellt wird.

Der Mantel der Dichtung besteht aus einem Material, das PTFE-Kunststoff oder auf PTFE basierenden Kunststoff enthält, oder aus einem FEP- und/oder PFA-Kunststoff enthaltenden Material.

Von Vorteil ist insbesondere auch, wenn der Kern der Dichtung aus einem Fluorelastomer enthaltenden Material besteht.

Auch bezüglich der erfindungsgemäßen Verwendung ist wieder von Vorteil, wenn der Mantel der Dichtung eine Dicke im Bereich von 0,1 mm bis 1,5 mm und insbesondere eine Dicke im Bereich von 0,2 mm bis 0,8 mm besitzt.

Zur Abdichtung der betreffenden Verbindung können insbesondere auch wieder zumindest zwei ineinander liegende Dichtungen vorgesehen und zumindest die innere Dichtung mit einem Mantel versehen sein. Dabei ist der Mantel der inneren Dichtung wieder auf der der äußeren Dichtung zugewandten Seite offen oder überlappend ausgeführt. Dabei sind bevorzugt wieder Mittel zur Absaugung des Bereichs zwischen den beiden Dichtungen vorgesehen.

Wie ebenfalls bereits erwähnt, kann eine jeweilige Dichtung beispielsweise als O-Ring oder als Flachdichtung ausgeführt sein.

Ein weiterer Aspekt der Erfindung betrifft ein Vakuumsystem mit zumindest einem ersten Gegenstand und einem zweiten Gegenstand, die über wenigstens eine Öffnung miteinander verbindbar oder verbunden sind, wobei zur Abdichtung der Verbindung wenigstens eine Dichtung vorgesehen ist, die einen Kern, insbesondere einen Elastomerkern, sowie einen Mantel umfasst, der den Kern auf dessen der Öffnung zugewandten Seite umgibt, und wobei in zumindest einem der Gegenstände ein Druck kleiner oder gleich 10⁻⁵ mbar, vorzugsweise kleiner oder gleich 10⁻⁷ mbar, insbesondere kleiner oder gleich 10⁻⁹ mbar herrscht oder, insbesondere mittels des anderen Gegenstandes, herstellbar ist.

Insbesondere ist vorgesehen, dass der Mantel den Kern im Querschnitt gesehen über mehr als die Hälfte, vorzugsweise über mehr als zwei Drittel, insbesondere über mehr als drei Viertel, von dessen Umfang umgibt. Bei dem Mantel handelt es sich hierbei also gerade nicht um eine beispielsweise zur Zentrierung dienende Anlage, an welcher der z.B. als O-Ring ausgebildete Kern lediglich anliegt und wie sie beispielsweise in Form eines insbesondere metallischen, im Querschnitt rechteckigen oder auch leicht gewölbten, den O-Ring z.B. mit einer leicht konkav geformten Seite aufnehmenden Zentrierrings bekannt ist.

Was mögliche Abmessungen der erfindungsgemäßen Dichtungen anbetrifft, so kann z.B. vorgesehen sein, dass die Stärke oder Dicke m des Mantels von der Stärke bzw. der so genannten Schnurstärke des Kerns k abhängig ist, wobei z.B. für 1,0mm ≤ k < 4mm ein Wert für m im Bereich von 0,2 bis 0,3mm, insbesondere von etwa 0,25mm, für 4mm ≤ k < 6mm ein Wert für m im Bereich von 0,3 bis 0,5mm, insbesondere von etwa 0,4mm, für 6mm ≤ k < 10mm ein Wert für m im Bereich von 0,4 bis 0,6mm, insbesondere von etwa 0,5mm, und für 10 mm ≤ k ≤ 20mm ein Wert für m im Bereich von 0,5 bis 0,9mm, insbesondere von etwa 0,8mm, gewählt wird.

Wenn die Dichtung eine geschlossene Ringform aufweist und insbesondere als O-Ring-Dichtung ausgebildet ist, dann kann z.B. vorgesehen sein, dass die Stärke bzw. die so genannte Schnurstärke des Kerns k vom Innendurchmesser I der Dichtung abhängig ist, wobei z.B. für I ≥ etwa 5mm ein Wert für k im Bereich von 1,6 bis 2mm, insbesondere von etwa 1,8mm, für I ≥ etwa 7mm ein Wert für k im Bereich von 2,4 bis 2,8mm, insbesondere von etwa 2,6mm, für I ≥ etwa 12mm ein Wert für k im Bereich von 3,3 bis 3,7mm, insbesondere von etwa 3,5mm, für I ≥ etwa 20mm ein Wert für k im Bereich von 5 bis 5,6mm, insbesondere von etwa 5,3mm, und für I ≥ etwa 45mm ein Wert für k im Bereich von 6,6 bis 7,4mm, insbesondere von etwa 7mm, gewählt wird. Die maximalen Werte für den Innendurchmesser I können zwischen etwa 1.000mm und 1.600mm liegen.

Allgemein liegt der Erfindung somit der Gedanke zugrunde, dass mit den vorstehend angegebenen Dichtungen eine vakuumdichte Verbindung auch für sehr niedrige Druckbereiche realisiert, die Vakuumdichtigkeit also auch im Hochvakuum- und Ultrahochvakuumbereich gewährleistet werden kann, so dass diese Dichtungen auch für Turbomolekularpumpen bzw. SplitFlow-Pumpen sowie für im Hochvakuum- bzw. Ultrahochvakuumbereich einzusetzendes Vakuumzubehör verwendet werden können.

Die Erfindung wird im Folgenden anhand eines Ausführungsbeispiels unter Bezugnahme auf die Zeichnung näher erläutert; in dieser zeigen:
- Fig. 1: eine schematische Darstellung einer beispielhaften Ausführungsform einer Vakuumpumpe, bei der die Erfindung realisierbar ist,
- Fig. 2: eine schematische Schnittdarstellung eines Vakuumanschlusses einer beispielhaften Ausführungsform einer erfindungsgemäßen Vakuumpumpe,
- Fig. 3: eine schematische Schnittdarstellung eines Vakuumanschlusses einer weiteren beispielhaften Ausführungsform einer erfindungsgemäßen Vakuumpumpe, und
- Fig. 4a bis 4c: Beispiele für erfindungsgemäße und nicht beanspruchte (d.h. nicht erfindungsgemäße) Dichtungen jeweils in einer vergrößerten Querschnittsansicht.

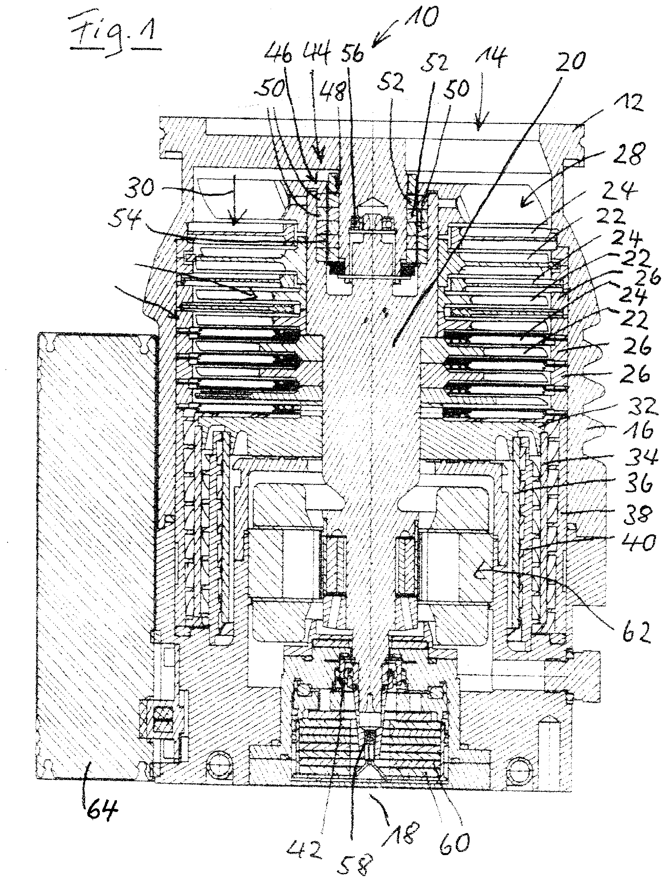

Die in Fig. 1 gezeigte Vakuumpumpe 10 umfasst einen von einem Einlassflansch 12 umgebenen Pumpeneinlass oder Ansaugöffnung 14 sowie mehrere Pumpstufen zur Förderung des an dem Pumpeneinlass 14 anstehenden Gases zu einem in Fig. 1 nicht dargestellten Pumpenauslass. Die Vakuumpumpe 10 umfasst einen Stator mit einem statischen Gehäuse 16 und einen in dem Gehäuse 16 angeordneten Rotor mit einer um die Rotorachse 18 drehbar gelagerten Rotorwelle 20.

Die Vakuumpumpe 10 ist als Turbomolekularpumpe ausgebildet und umfasst mehrere pumpwirksam miteinander in Serie geschaltete turbomolekulare Pumpstufen mit mehreren mit der Rotorwelle 20 verbundenen turbomolekularen Rotorscheiben 22 und mehreren in axialer Richtung zwischen den Rotorscheiben 22 angeordneten und in dem Gehäuse 16 festgelegten turbomolekularen Statorscheiben 24, die durch Distanzringe 26 in einem gewünschten axialen Abstand zueinander gehalten sind. Die Rotorscheiben 22 und Statorscheiben 24 stellen in einem Schöpfbereich 28 eine in Richtung des Pfeils 30 gerichtete axiale Pumpwirkung bereit.

Die Vakuumpumpe 10 umfasst zudem drei in radialer Richtung ineinander angeordnete und pumpwirksam miteinander in Serie geschaltete Holweck-Pumpstufen. Der rotorseitige Teil der Holweck-Pumpstufen umfasst eine mit der Rotorwelle 20 verbundene Rotornabe 32 und zwei an der Rotornabe 32 befestigte und von dieser getragene zylindermantelförmige Holweck-Rotorhülsen 34, 36, die koaxial zu der Rotorachse 18 orientiert und in radialer Richtung ineinander geschachtelt sind. Ferner sind zwei zylindermantelförmige Holweck-Statorhülsen 38, 40 vorgesehen, die ebenfalls koaxial zu der Rotorachse 18 orientiert und in radialer Richtung ineinander geschachtelt sind. Die pumpaktiven Oberflächen der Holweck-Pumpstufe sind jeweils durch die einander unter Ausbildung eines engen radialen Holweck-Spalts gegenüberliegenden radialen Mantelflächen jeweils einer Holweck-Rotorhülse 34, 36 und einer Holweck-Statorhülse 38, 40 gebildet. Dabei ist jeweils eine der pumpaktiven Oberflächen glatt ausgebildet, im vorliegenden Fall die der Holweck-Rotorhülse 34 bzw. 36, und die gegenüberliegende pumpaktive Oberfläche der Holweck-Statorhülse 38, 40 weist eine Strukturierung mit schraubenlinienförmig um die Rotationsachse 18 herum in axialer Richtung verlaufenden Nuten auf, in denen durch die Rotation des Rotors das Gas vorangetrieben und dadurch gepumpt wird.

Die drehbare Lagerung der Rotorwelle 20 wird durch ein Wälzlager 42 im Bereich des Pumpenauslasses und ein Permanentmagnetlager 44 im Bereich des Pumpeneinlasses 14 bewirkt.

Das Permanentmagnetlager 44 umfasst eine rotorseitige Lagerhälfte 46 und eine statorseitige Lagerhälfte 48, die jeweils einen Ringstapel aus mehreren in axialer Richtung aufeinander gestapelten permanentmagnetischen Ringen 50, 52 umfassen, wobei die Magnetringe 50, 52 unter Ausbildung eines radialen Lagerspalts 54 einander gegenüberliegen.

Innerhalb des Permanentmagnetlagers 44 ist ein Not- oder Fanglager 56 vorgesehen, das als ungeschmiertes Wälzlager ausgebildet ist und im normalen Betrieb der Vakuumpumpe ohne Berührung leerläuft und erst bei einer übermäßigen radialen Auslenkung des Rotors gegenüber dem Stator in Eingriff gelangt, um einen radialen Anschlag für den Rotor zu bilden, der eine Kollision der rotorseitigen Strukturen mit den statorseitigen Strukturen verhindert.

Im Bereich des Wälzlagers 42 ist an der Rotorwelle 20 eine konische Spritzmutter 58 mit einem zu dem Wälzlager 42 hin zunehmenden Außendurchmesser vorgesehen, die mit einem Abstreifer eines mehrere mit einem Betriebsmittel, wie z.B. einem Schmiermittel, getränkte saugfähige Scheiben 60 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 58 übertragen und infolge der Zentrifugalkraft entlang der Spritzmutter 58 in Richtung des größer werdenden Außendurchmessers der Spritzmutter 58 zu dem Wälzlager 42 hin gefördert, wo es z.B. eine schmierende Funktion erfüllt.

Die Vakuumpumpe umfasst einen Antriebsmotor 62 zum drehenden Antreiben des Rotors, dessen Läufer durch die Rotorwelle 20 gebildet ist. Eine Steuereinheit 64 steuert den Antriebsmotor 62 an.

Die turbomolekularen Pumpstufen stellen in dem Schöpfbereich 28 eine Pumpwirkung in Richtung des Pfeils 30 bereit.

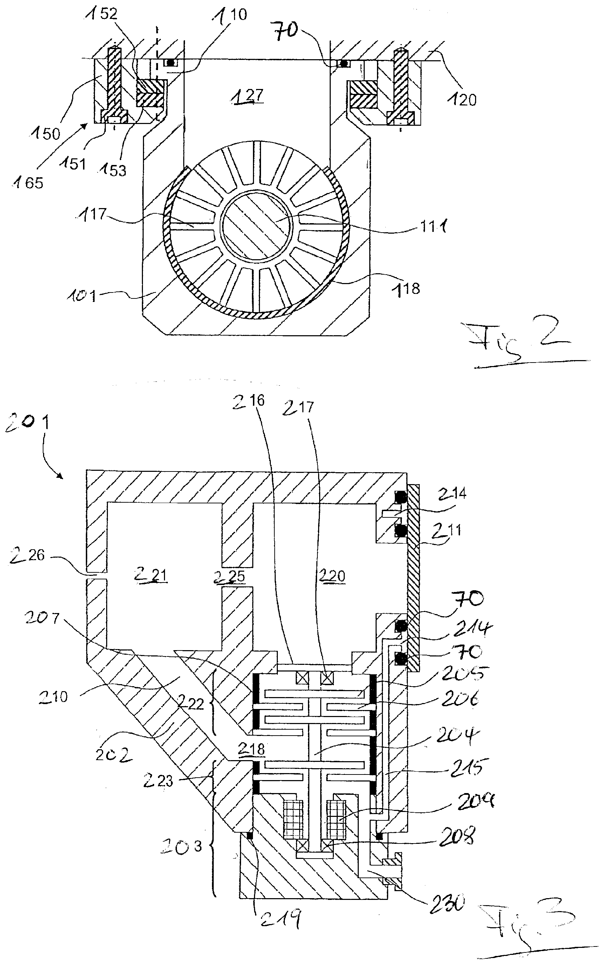

Die Vakuumpumpe 10 kann anstelle des aus der Fig. 1 ersichtlichen stirnseitigen Pumpeneinlasses 14 oder zusätzlich zu diesem Pumpeneinlass 14 beispielsweise auch wenigstens eine seitliche Ansaugöffnung aufweisen (vgl. Fig. 2). Soweit im Folgenden von einer Ansaugöffnung die Rede ist, kann diese auf einer Stirnseite der Vakuumpumpe 10 oder auch seitlich angeordnet sein.

Fig. 2 zeigt in schematischer Schnittdarstellung einen seitlichen Vakuumanschluss einer beispielhaften Ausführungsform einer erfindungsgemäßen Vakuumpumpe 101 mit einem Flansch 110, hier beispielsweise wieder einer Turbomolekularpumpe, die über eine Ansaugöffnung 127 mit einem Rezipienten 120, von welchem hier der Flansch dargestellt ist, verbindbar und zur Erzeugung eines Drucks kleiner oder gleich 10⁻⁵ mbar, vorzugsweise zur Erzeugung eines Drucks kleiner oder gleich 10⁻⁷ mbar, insbesondere zur Erzeugung eines Drucks kleiner oder gleich 10⁻⁹ mbar, in dem Rezipienten 120 ausgeführt ist. Zwischen dem Flansch 120 des Rezipienten und dem Flansch 110 der Pumpe befindet sich eine erfindungsgemäße Dichtung 70. Dargestellt in Fig. 2 sind von der Pumpe 110 deren Welle 111, eine Distanzhülse 118 und die letzte Statorscheibe 117 der hochvakuumseitigen Pumpstufe. Eine Kraftübertragungsstruktur 165 zur Montage und Demontage der Pumpe 101 am bzw. vom Flansch 120 des Rezipienten, z.B. einer Kammer, umfasst einen Haltewinkel 150, eine Befestigungsschraube 151 sowie Spreizelemente 152, 153. Näher soll an dieser Stelle auf den Aufbau dieser Anordnung nicht eingegangen werden.

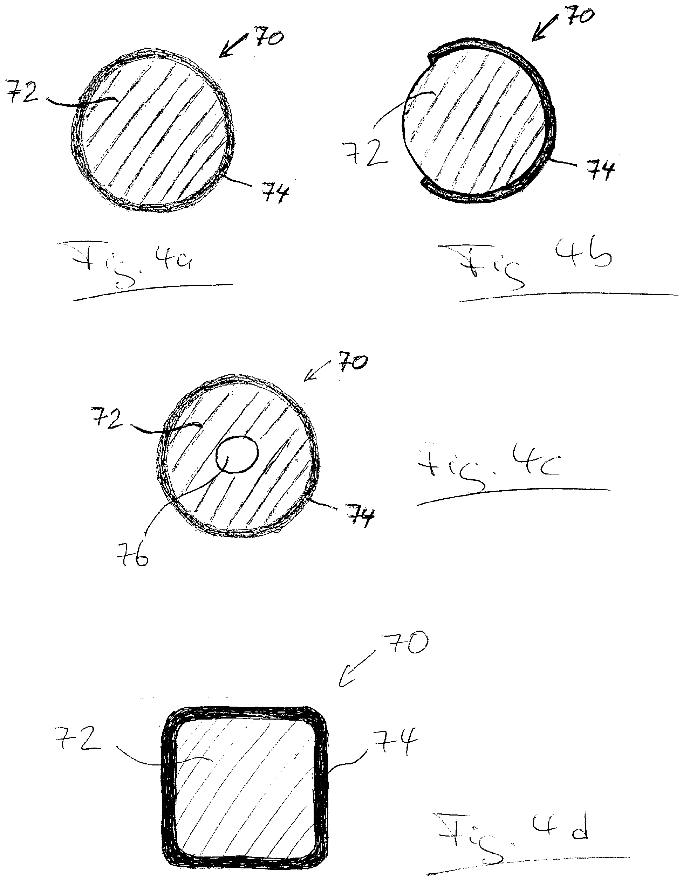

Dabei ist zur Abdichtung der Verbindung eine Dichtung 70 vorgesehen, die (vgl. die Querschnittsansichten der Fig. 4a bis 4d) einen Elastomerkern 72 sowie einen Mantel 74 umfasst. In den in Fig. 4a), 4c) und 4d) gezeigten nicht beanspruchten Beispielen umgibt der Mantel 74 den Elastomerkern 72 vollumfänglich und ist geschlossen (d.h. der Mantel 74 deckt in Umfangsrichtung genau 360° ab).

In der in Fig. 4b gezeigten erfindungsgemäßen Ausgestaltung ist der Mantel 74 aber an einer Seite offen, wobei dann der Mantel 74 in Umfangsrichtung gesehen weniger als 360° abdeckt, d.h. einen Teil des Elastomerkerns freiliegen lässt. Als eine alternative erfindungsgemäße Ausgestaltung, kann der Mantel 74 auch überlappend ausgebildet sein, d.h. in Umfangsrichtung gesehen deckt der Mantel 74 mehr als 360° ab. Wie eingangs bereits erwähnt, deckt der Mantel 74 den Kern 72 bevorzugt über mehr als die Hälfte - in Umfangsrichtung gesehen - ab, d.h. bevorzugt ist ein Umgreifen des Kerns 72 durch den Mantel 74 vorgesehen, wie z.B. in Fig. 4b gezeigt. Bei einem Kern 72 mit kreisförmigem Querschnitt deckt der Mantel folglich einen Winkelbereich von mehr als 180° ab. Ein solcher umgreifender, nicht geschlossener Mantel 74 kann alternativ auch bei den nicht beanspruchten Beispielen der Fig. 4c und Fig. 4d vorgesehen sein, so dass sie dann erfindungsgemäß ausgebildet sind. Das Beispiel der Fig. 4c veranschaulicht, dass die Dichtung 70 keine Volldichtung sein muss, sondern eine hier so bezeichnete Hohldichtung sein kann, in der ein oder mehrere Hohlräume - gemäß Fig. 4c z.B. genau ein sich in Längsrichtung innerhalb des Kerns 72 erstreckender zentraler Hohlraum - ausgebildet sein können. Die Querschnittsform der Dichtung 70 und/oder des Kerns 72 ist grundsätzlich beliebig. Fig. 4d veranschaulicht, dass die Dichtung 70 bzw. der Kern 72 auch einen im Wesentlichen eckigen Querschnitt mit insbesondere abgerundeten Eckbereich aufweisen kann. Der Querschnitt kann z.B. -wie in Fig. 4d - im Wesentlichen quadratisch oder auch rechteckig sein. Auch elliptische oder ovale Querschnitte sind möglich. Alle vorstehend genannten besonderen Eigenschaften (nicht geschlossener Mantel, ein oder mehrere Hohlräume, Querschnittsform etc.) können grundsätzlich beliebig miteinander kombiniert werden.

Es können auch mehrere separate, identisch oder unterschiedlich ausgebildete, Kerne, insbesondere aneinander anliegend, von einem gemeinsamen Mantel umgeben sein. Auch können ein oder mehrere Kerne von mehreren separaten Mänteln umgeben sein.

Erfindungsgemäß kann der Mantel 74 der Dichtung 70 aus einem Material bestehen, das PTFE-Kunststoff oder auf PTFE basierenden Kunststoff enthält, oder aus einem FEP- und/oder PFA-Kunststoff enthaltenden Material bestehen. Der Elastomerkern 72 der Dichtung 70 kann insbesondere aus einem Fluorelastomer enthaltenden Material bestehen.

Im vorliegenden Fall besteht der Mantel 74 der Dichtung 70 beispielsweise aus einem FEP- und/oder PFA-Kunststoff enthaltenden Material.

Die Dicke des Mantels 74 der Dichtung 70 kann insbesondere im Bereich von 0,1 mm bis 1,5 mm liegen, wobei sie bevorzugt im Bereich von 0,2 mm bis 0,8 mm liegt.

Im vorliegenden Fall ist die Dichtung 70 beispielsweise als O-Dichtung vorgesehen. Sie kann jedoch insbesondere auch als Flachdichtung ausgeführt sein.

Während der Vakuumanschluss in der Darstellung gemäß Fig. 2 eine seitliche Ansaugöffnung umfasst, kann ein entsprechend ausgebildeter Vakuumanschluss grundsätzlich auch eine stirnseitige Ansaugöffnung beispielsweise in Form des aus Fig. 1 ersichtlichen Pumpeneinlasses 14 umfassen.

Zur Abdichtung der betreffenden Verbindung können beispielsweise auch zwei zueinander koaxiale Dichtungen vorgesehen sein. In diesem Fall ist zumindest die innere Dichtung mit einem Mantel versehen. Dabei ist der Mantel der inneren Dichtung erfindungsgemäß auf der der äußeren Dichtung zugewandten Seite offen oder überlappend ausgeführt. Dabei können insbesondere Mittel zur Absaugung des Bereichs zwischen den beiden Dichtungen vorgesehen sein. Die äußere Dichtung kann mit oder ohne Ummantelung vorgesehen sein.

Ein Beispiel für eine solche Anwendung mit zwei zueinander koaxialen Dichtungen 70 zeigt Fig. 3. Die Dichtungen 70 sind hier zwischen einem Deckel 211 und einem Gehäuse 202 angeordnet. Zwischen den Dichtungen 70 ist ein Ringkanal 214 vorgesehen, in welchem Unterdruck erzeugt wird. Hierfür ist eine Leitung 215 vorgesehen, die entweder in einer der Pumpstufen der Vakuumpumpe 201 oder an einem Gasauslasskanal 230 mündet. Darüber hinaus sind in Fig. 3 das bereits erwähnte Gehäuse 202, eine Unterteilbaugruppe 203 sowie eine Welle 204 dargestellt, die an einem ersten Ende durch ein Wälzlager 208 und am gegenüberliegenden, vakuumseitigen Ende durch ein Permanentmagnetlager 217 drehbar unterstützt ist, welches durch eine Trägerstruktur 216 im Gehäuse 20 fixiert ist. Das Pumpsystem der Pumpe 201 umfasst pumpaktive Rotorstrukturen 205 sowie pumpaktive Statorstrukturen 206 und Distanzstücke 207. Des Weiteren sind Antriebsmittel 209 für die Welle 204 vorgesehen. Im Gehäuse 202 sind Vakuumkammern 220 und 221 angeordnet, die durch eine Verbindung 225 miteinander verbunden sind. Die Kammer 220 ist direkt mit der ersten Pumpstufe 222 des Pumpsystems verbunden. Die Kammer 221 ist über einen Saugkanal 210 mit einem Zwischeneinlass 218 verbunden, über den Gas in die zweite Pumpstufe 223 eingelassen werden kann. Für die Kammer 221 ist eine Öffnung 226 vorgesehen, durch die z.B. ein zu analysierendes Gas oder ein Teilchenstrom eingelassen werden kann.

Die oben beschriebene Anordnung ist nur ein mögliches Beispiel für die Anwendung der erfindungsgemäßen Dichtungen 70.

Vakuumanschlüsse, wie z.B. vorstehend beschrieben, sind insbesondere auch bei Vakuumzubehör denkbar, das für Drücke kleiner oder gleich 10⁻⁵ mbar, vorzugsweise für Drücke kleiner oder gleich 10⁻⁷ mbar, insbesondere für Drücke kleiner oder gleich 10⁻⁹ mbar ausgelegt ist. Solches Vakuumzubehör kann beispielsweise Flut- oder Sperrgasventile, Drucksensoren, Temperatursensoren, Schaugläser, Blenden, Gasregulierventile, Hochvakuum-Schieber, Ultrahochvakuum-Schieber und/oder dergleichen umfassen.

### Bezugszeichenliste

- 10: Vakuumpumpe
- 12: Einlassflansch
- 14: Pumpeneinlass, Ansaugöffnung
- 16: Gehäuse
- 18: Rotationsachse
- 20: Rotorwelle
- 22: Rotorscheibe
- 24: Statorscheibe
- 26: Distanzring
- 28: Schöpfbereich
- 30: Pfeil
- 32: Rotornabe
- 34: Holweck-Rotorhülse
- 36: Holweck-Rotorhülse
- 38: Holweck-Statorhülse
- 40: Holweck-Statorhülse
- 42: Wälzlager
- 44: Permanentmagnetlager
- 46: rotorseitige Lagerhälfte
- 48: statorseitige Lagerhälfte
- 50: permanentmagnetischer Ring
- 52: permanentmagnetischer Ring
- 54: radialer Lagerspalt
- 56: Not- oder Fanglager
- 58: konische Spritzmutter
- 60: saugfähige Scheibe
- 62: Antriebsmotor
- 64: Steuereinheit
- 70: Dichtung
- 72: Elastomerkern
- 74: Mantel
- 76: Hohlraum

## Patentansprüche

1. Vakuumgerät, nämlich Vakuumpumpe (10), insbesondere Turbomolekularpumpe oder SplitFlow-Pumpe, die über wenigstens eine Ansaugöffnung mit einem Rezipienten verbindbar und zur Erzeugung eines Drucks kleiner oder gleich 10⁻⁵ mbar, vorzugsweise zur Erzeugung eines Drucks kleiner oder gleich 10⁻⁷ mbar, insbesondere zur Erzeugung eines Drucks kleiner oder gleich 10⁻⁹ mbar, in dem Rezipienten ausgeführt ist, wobei zur Abdichtung der Verbindung wenigstens eine Dichtung (70) vorgesehen ist, **dadurch gekennzeichnet, dass** die Dichtung (70) einen Kern, insbesondere einen Elastomerkern (72), sowie einen Mantel (74) umfasst,
dass der Mantel (74) der Dichtung (70) aus einem Material besteht, das PTFE-Kunststoff oder auf PTFE basierenden Kunststoff enthält, oder aus einem FEP- und/oder PFA-Kunststoff enthaltenden Material besteht, dass der Mantel (74) den Kern (72) auf dessen der Ansaugöffnung zugewandten Seite umgibt, und
dass der Mantel (74) auf einer Seite, insbesondere auf dessen von der Ansaugöffnung abgewandten Seite, offen oder überlappend ausgeführt ist.

2. Vakuumgerät nach Anspruch 1,
**dadurch gekennzeichnet, dass** der Kern der Dichtung aus einem Fluorelastomer enthaltenden Material besteht.

3. Vakuumgerät nach zumindest einem der vorstehenden Ansprüche, **dadurch gekennzeichnet, dass** der Mantel der Dichtung eine Dicke im Bereich von 0,1 mm bis 1,5 mm und insbesondere eine Dicke im Bereich von 0,2 mm bis 0,8 mm besitzt.

4. Vakuumgerät nach zumindest einem der vorstehenden Ansprüche,
**dadurch gekennzeichnet, dass** der Mantel (74) den Kern (72) im Querschnitt gesehen über mehr als die Hälfte, vorzugsweise über mehr als zwei Drittel, insbesondere über mehr als drei Viertel, von dessen Umfang umgibt.

5. Vakuumgerät nach zumindest einem der vorstehenden Ansprüche,
**dadurch gekennzeichnet, dass** die Dichtung eine geschlossene Ringform aufweist und insbesondere als O-Ring-Dichtung oder Flachdichtung ausgebildet ist.

6. Vakuumgerät nach zumindest einem der vorstehenden Ansprüche,
**dadurch gekennzeichnet, dass** zur Abdichtung der Verbindung zumindest zwei ineinander liegende, insbesondere zueinander koaxiale, Dichtungen vorgesehen sind und zumindest die innere Dichtung mit dem Mantel versehen ist,
wobei insbesondere Mittel zur Absaugung des Bereichs zwischen den beiden Dichtungen vorgesehen sind.

7. Vakuumgerät nach zumindest einem der vorstehenden Ansprüche,
**dadurch gekennzeichnet, dass** der Mantel als, insbesondere mit dem Kern fest verbundene, Beschichtung oder als, insbesondere mit dem Kern nicht fest verbundene, Ummantelung ausgebildet ist.

8. Vakuumsystem mit zumindest einem ersten Gegenstand (10) und einem zweiten Gegenstand, die über wenigstens eine Öffnung miteinander verbindbar oder verbunden sind, wobei in zumindest einem der Gegenstände ein Druck kleiner oder gleich 10⁻⁵ mbar, vorzugsweise kleiner oder gleich 10⁻⁷ mbar, insbesondere kleiner oder gleich 10⁻⁹ mbar, herrscht oder, insbesondere mittels des anderen Gegenstandes (10), herstellbar ist,
wobei zur Abdichtung der Verbindung wenigstens eine Dichtung (70) vorgesehen ist,
**dadurch gekennzeichnet,**
**dass** die Dichtung (70) einen Kern, insbesondere einen Elastomerkern (72), sowie einen Mantel (74) umfasst,
**dass** der Mantel (74) der Dichtung (70) aus einem Material besteht, das PTFE-Kunststoff oder auf PTFE basierenden Kunststoff enthält, oder aus einem FEP- und/oder PFA-Kunststoff enthaltenden Material besteht,
**dass** der Mantel (74) den Kern (72) auf dessen der Öffnung zugewandten Seite umgibt, und
**dass** der Mantel (74) auf einer Seite, insbesondere auf dessen von der Öffnung abgewandten Seite, offen oder überlappend ausgeführt ist.

9. Verwendung einer Dichtung (70) zur Abdichtung in einem Vakuumsystem mit zumindest einem ersten Gegenstand (10) und einem zweiten Gegenstand, die über wenigstens eine Ansaugöffnung und/oder Öffnung miteinander verbindbar oder verbunden sind, insbesondere zur Abdichtung einer Verbindung einer Vakuumpumpe (10), insbesondere Turbomolekularpumpe oder SplitFlow-Pumpe, mit einem Rezipienten über die wenigstens eine Ansaugöffnung und/oder einer Verbindung mit Vakuumzubehör über die wenigstens eine Öffnung,
wobei das Vakuumsystem für Drücke oder zur Erzeugung von Drücken kleiner oder gleich 10⁻⁵ mbar, vorzugsweise kleiner oder gleich 10⁻⁷ mbar, insbesondere kleiner oder gleich 10⁻⁹ mbar, ausgelegt ist, und/oder wobei in dem Vakuumsystem auf zumindest einer Seite der Verbindung ein Druck kleiner oder gleich 10⁻⁵ mbar, vorzugsweise kleiner oder gleich 10⁻⁷ mbar, insbesondere kleiner oder gleich 10⁻⁹ mbar, herrscht oder hergestellt wird
**dadurch gekennzeichnet,**
**dass** die Dichtung (70) , die verwendet wird, einen Kern, insbesondere einen Elastomerkern (72), sowie einen Mantel (74) umfasst, wobei der Mantel (74) aus einem Material besteht, das PTFE-Kunststoff oder auf PTFE basierenden Kunststoff enthält, oder aus einem FEP- und/oder PFA-Kunststoff enthaltenden Material besteht, und
wobei der Mantel (74) zumindest auf einer Seite offen oder überlappend ausgeführt ist, und
**dass** die Dichtung so angeordnet wird, dass der Mantel (74) den Kern (72) auf dessen der Ansaugöffnung bzw. der Öffnung zugewandten Seite umgibt, und dass der Mantel (74) auf einer Seite, insbesondere auf dessen von der Ansaugöffnung bzw. der Öffnung abgewandten Seite, offen oder überlappend ausgeführt ist.

10. Verwendung nach Anspruch 9,
**dadurch gekennzeichnet , dass** der Kern der Dichtung aus einem Fluorelastomer enthaltenden Material besteht.

## Claims

1. A vacuum device, namely a vacuum pump (10), in particular a turbomolecular pump or a split-flow pump, which is connectable to a recipient via at least one suction opening and which is designed to generate a pressure of less than or equal to 10⁻⁵ mbar, preferably to generate a pressure of less than or equal to 10⁻⁷ mbar, in particular to generate a pressure of less than or equal to 10⁻⁹ mbar, in the recipient, wherein at least one seal (70) is provided to seal the connection, **characterized in that** the seal (70) comprises a core, in particular an elastomer core (72), and a jacket (74);
**in that** the jacket (74) of the seal (70) consists of a material which includes PTFE plastic or PTFE-based plastic or consists of a material including FEP plastic and/or PFA plastic;
**in that** the jacket (74) surrounds the core (72) at its side facing the suction opening; and
**in that** the jacket (74) is designed as open or overlapping at one side, in particular at its side remote from the suction opening.

2. A vacuum device in accordance with claim 1,
**characterized in that** the core of the seal consists of a material including a fluoroelastomer.

3. A vacuum device in accordance with at least one of the preceding claims, **characterized in that** the jacket of the seal has a thickness in the range from 0.1 mm to 1.5 mm and in particular has a thickness in the range from 0.2 mm to 0.8 mm.

4. A vacuum device in accordance with at least one of the preceding claims, **characterized in that** the jacket (74) surrounds the core (72), viewed in cross-section, over more than half, preferably over more than two thirds, in particular over more than three quarters, of the periphery of the core (72).

5. A vacuum device in accordance with at least one of the preceding claims, **characterized in that** the seal has a closed ring shape and is in particular designed as an O-ring seal or as a flat seal.

6. A vacuum device in accordance with at least one of the preceding claims, **characterized in that** at least two seals one lying within the other one, which are in particular coaxial with respect to one another, are provided for sealing the connection and at least the inner seal is provided with the jacket,
with means in particular being provided for the suction of the region between the two seals.

7. A vacuum device in accordance with at least one of the preceding claims, **characterized in that** the jacket is configured as a coating, which is in particular fixedly connected to the core, or as a cover which is in particular not fixedly connected to the core.

8. A vacuum system comprising at least a first object (10) and a second object which are connectable or connected to one another via at least one opening, wherein a pressure of less than or equal to 10⁻⁵ mbar, preferably of less than or equal to 10⁻⁷ mbar, in particular of less than or equal to 10⁻⁹ mbar, is present in at least one of the objects or can be produced, in particular by means of the other object (10),
wherein at least one seal (70) is provided for sealing the connection, **characterized in that**
the seal (70) comprises a core, in particular an elastomer core (72), and a jacket (74);
**in that** the jacket (74) of the seal (70) consists of a material which includes PTFE plastic or PTFE-based plastic or consists of a material including FEP plastic and/or PFA plastic;
**in that** the jacket (74) surrounds the core (72) at its side facing the opening; and
**in that** the jacket (74) is designed as open or overlapping at one side, in particular at its side remote from the opening.

9. Use of a seal (70) for sealing in a vacuum system (10) comprising at least a first object (10) and a second object which are connectable or connected to one another via at least one suction opening and/or opening, in particular for sealing a connection of a vacuum pump (10), in particular of a turbomolecular pump or a split-flow pump, to a recipient via the at least one suction opening and/or for sealing a connection to vacuum accessories via the at least one opening,
wherein the vacuum system is designed for pressures or for generating pressures of less than or equal to 10⁻⁵ mbar, preferably less than or equal to 10⁻⁷ mbar, in particular less than or equal to 10⁻⁹ mbar, and/or
wherein a pressure of less than or equal to 10⁻⁵ mbar, preferably of less than or equal to 10⁻⁷ mbar, in particular of less than or equal to 10⁻⁹ mbar, is present or is produced in the vacuum system at at least one side of the connection,
**characterized in that** the seal (70) which is used comprises a core, in particular an elastomer core (72), and a jacket (74), with the jacket (74) consisting of a material which includes PTFE plastic or PTFE-based plastic or consisting of a material including FEP plastic and/or PFA plastic, and with the jacket (74) being designed as open or overlapping at at least one side;
**in that** the seal is arranged such that the jacket (74) surrounds the core (72) at its side facing the suction opening or the opening; and **in that** the jacket (74) is designed as open or overlapping at one side, in particular at its side remote from the suction opening or the opening.

10. Use in accordance with claim 9,
**characterized in that** the core of the seal consists of a material including a fluoroelastomer.

## Revendications

1. Appareil à vide, à savoir pompe à vide (10), en particulier pompe turbomoléculaire ou pompe à flux divisé (« SplitFlow »), qui peut être relié(e) à un récipient par au moins une ouverture d'aspiration et qui est réalisé(e) pour générer dans le récipient une pression inférieure ou égale à 10⁻⁵ mbar, de préférence pour générer une pression inférieure ou égale à 10⁻⁷ mbar, en particulier pour générer une pression inférieure ou égale à 10⁻⁹ mbar, au moins un joint d'étanchéité (70) étant prévu pour étancher la liaison, **caractérisé en ce que**
le joint d'étanchéité (70) comprend un noyau, en particulier un noyau en élastomère (72), ainsi qu'une enveloppe (74), **en ce que** l'enveloppe (74) du joint d'étanchéité (70) est constituée en un matériau contenant de la matière plastique de PTFE ou de la matière plastique à base de PTFE, ou en un matériau contenant une matière plastique de FEP et/ou de PFA, **en ce que**
l'enveloppe (74) entoure le noyau (72) sur son côté tourné vers l'ouverture d'aspiration, et **en ce que**
l'enveloppe (74) est réalisée ouverte ou en chevauchement sur un côté, en particulier sur son côté détourné de l'ouverture d'aspiration.

2. Appareil à vide selon la revendication 1,
**caractérisé en ce que**
le noyau du joint d'étanchéité est constitué en un matériau contenant de l'élastomère fluoré.

3. Appareil à vide selon l'une au moins des revendications précédentes, **caractérisé en ce que**
l'enveloppe du joint d'étanchéité présente une épaisseur dans la plage de 0,1 mm à 1,5 mm et en particulier une épaisseur dans la plage de 0,2 mm à 0,8 mm.

4. Appareil à vide selon l'une au moins des revendications précédentes,
**caractérisé en ce que**
l'enveloppe (74) entoure le noyau (72), vu en section transversale, sur plus de la moitié, de préférence sur plus de deux tiers, en particulier sur plus de trois quarts, de sa circonférence.

5. Appareil à vide selon l'une au moins des revendications précédentes,
**caractérisé en ce que**
le joint d'étanchéité présente une forme annulaire refermée et est réalisé en particulier sous forme de joint torique ou de joint plat.

6. Appareil à vide selon l'une au moins des revendications précédentes,
**caractérisé en ce que**
au moins deux joints d'étanchéité se trouvant l'un dans l'autre, en particulier coaxiaux l'un par rapport à l'autre, sont prévus pour étancher la liaison, et au moins le joint d'étanchéité intérieur est pourvu de l'enveloppe,
il est prévu en particulier des moyens pour évacuer par aspiration la zone entre les deux joints d'étanchéité.

7. Appareil à vide selon l'une au moins des revendications précédentes,
**caractérisé en ce que**
l'enveloppe est réalisée sous forme de revêtement qui est en particulier fermement relié au noyau, ou sous forme de gaine qui n'est pas fermement reliée au noyau.

8. Système à vide comportant au moins un premier objet (10) et un second objet, qui peuvent être reliés ou sont reliés entre eux par au moins une ouverture,
dans lequel
une pression inférieure ou égale à 10⁻⁵ mbar, de préférence inférieure ou égale à 10⁻⁷ mbar, en particulier inférieure ou égale à 10⁻⁹ mbar, règne dans l'un au moins des objets ou y peut être établie, en particulier au moyen de l'autre objet (10),
il est prévu au moins un joint d'étanchéité (70) pour étancher la liaison, **caractérisé en ce que**
le joint d'étanchéité (70) comprend un noyau, en particulier un noyau en élastomère (72), ainsi qu'une enveloppe (74),
l'enveloppe (74) du joint d'étanchéité (70) est constituée en un matériau contenant de la matière plastique de PTFE ou de la matière plastique à base de PTFE, ou en un matériau contenant une matière plastique de FEP et/ou de PFA, **en ce que**
l'enveloppe (74) entoure le noyau (72) sur son côté tourné vers l'ouverture, et **en ce que**
l'enveloppe (74) est réalisée ouverte ou en chevauchement sur un côté, en particulier sur son côté détourné de l'ouverture.

9. Utilisation d'un joint d'étanchéité (70) pour l'étanchéité dans un système à vide comportant au moins un premier objet (10) et un second objet qui sont reliés ou peuvent être reliés par au moins une ouverture d'aspiration et/ou une ouverture, en particulier pour étancher une liaison d'une pompe à vide (10), en particulier d'une pompe turbomoléculaire ou d'une pompe à flux divisé (« SplitFlow »), avec un récipient par ladite au moins une ouverture d'aspiration et/ou pour étancher une liaison avec un accessoire à vide par ladite au moins une ouverture,
dans laquelle
le système à vide est conçu pour des pressions ou pour générer des pressions inférieures ou égales à 10⁻⁵ mbar, de préférence inférieures ou égales à 10⁻⁷ mbar, en particulier inférieures ou égales à 10⁻⁹ mbar, et/ou dans le système à vide, sur au moins un côté de la liaison, une pression inférieure ou égale à 10⁻⁵ mbar, de préférence inférieure ou égale à 10⁻⁷ mbar, en particulier inférieure ou égale à 10⁻⁹ mbar, règne ou est établie, **caractérisée en ce que**
le joint d'étanchéité (70) que l'on utilise comprend un noyau, en particulier un noyau en élastomère (72), ainsi qu'une enveloppe (74), l'enveloppe (74) est constituée en un matériau contenant de la matière plastique de PTFE ou de la matière plastique à base de PTFE, ou en un matériau contenant une matière plastique de FEP et/ou de PFA, et **en ce que**
l'enveloppe (74) est réalisée ouverte ou en chevauchement sur au moins un côté, et **en ce que**
le joint d'étanchéité est disposé de telle sorte que l'enveloppe (74) entoure le noyau (72) sur son côté tourné vers l'ouverture d'aspiration ou vers l'ouverture, et **en ce que**
l'enveloppe (74) est réalisée ouverte ou en chevauchement sur un côté, en particulier sur son côté détourné de l'ouverture d'aspiration ou de l'ouverture.

10. Utilisation selon la revendication 9,
**caractérisée en ce que**
le noyau du joint d'étanchéité est constitué en un matériau contenant de l'élastomère fluoré.
